# EUROPEAN PATENT SPECIFICATION

(11) **EP 1 465 460 B1**
(45) Date of publication and mention of the grant of the patent: **17.09.2008**
(21) Application number: 04001720.4
(22) Date of filing: 27.01.2004
(51) Int. Cl.: H05B 3/74

(54) **Top plate for cooker**
Kochplattenoberteil
Plaque supérieure de cuisson pour appareil de cuisson

(30) Priority: 31.01.2003 JP 2003024164
(43) Date of publication of application: 06.10.2004
(73) Proprietor: NIPPON ELECTRIC GLASS CO., LTD, Otsu-shi, Shiga 520-8639 (JP)
(72) Inventor: Nakane, Shingo, Otsu-city Shiga 520-2152 (JP); Shimatani, Narutoshi, Uji-city Kyoto 611-0031 (JP)
(74) Representative: Merkle, Gebhard

(56) References cited:
- EP-A1- 0 794 158
- DE-A1- 3 703 342
- US-A- 4 211 820

## Description

### BACKGROUND OF THE INVENTION

### FIELD OF THE INVENTION

In addition to conventional gas cookers, infrared heating cookers utilizing a radiant heater or a halogen heater and electromagnetic heating (IH) cookers have come into use as household or commercial cookers.

As a top plate for these cookers, for example, color low-expansion crystallized glass with such a characteristic feature by coloring that provides a shield disabling the interior of the cooker to be seen from outside and allows passing of infrared rays from a radiant heater or a halogen heater can be exemplified (see, for example, Japanese Patent Laid Open NO. 62-182135).

Further, in an electromagnetic heating cooker, since red light due to heat generation by a radiant heater or halogen heater is not emitted, it is impossible to recognize that the cooker is under heating. Therefore, in order to ensure safety, the conventional electromagnetic heating cooker was so configured that a light-emitting element such as a light-emitting diode was placed under a transparent top plate, and an opaque coating was formed on the backside of the top plate excluding the part of the light-emitting element so that it can be recognized by the light from the light-emitting element that the cooker is under heating (see for example, Japanese Patent Publication No.2979211).

As the light-emitting element, blue, green and yellow light-emitting elements in addition to a red light-emitting element are desirably used since it is requested to display by color applied electric energy and temperature, as well as allow recognition of presence/absence of heating.

### DESCRIPTION OF THE RELATED ART

However, the opaque coating material described in Japanese Patent Publication No.2979211 necessitates a printing process and a baking process in some cases, so that it is difficult to provide a top plate at a low price. In addition, since the opaque coating material is larger in thermal expansion coefficient than a top plate substrate, a stress is likely to occur due to the difference in thermal expansion between the opaque coating material and the top plate substrate, and there used to be a fear that the opaque coating material will deteriorate due to repeated rise and fall of temperature of the top plate over a long period of time to lead occurrence of cracking and peeling.

On the other hand, when the top plate formed of color low-expansion crystallized glass described in Japanese Unexamined Patent Publication Laid Open No.62-182135 is used as a top plate for electromagnetic heating cooker, the necessity of printing the opaque coating material can be avoided, however, there arises a problem that the light from a red light-emitting element cannot sufficiently pass through and the light from light-emitting elements of blue, green, yellow and the like colors cannot completely pass through.

### SUMMARY OF THE INVENTION

In consideration of the above problems, it is an object of the present invention to provide a top plate for cooker formed of color crystallized glass of low price capable of shielding the internal structure of the cooker such as heating device, wiring and the like, and allowing the light from light-emitting elements of blue, green, yellow, red and the like colors to sufficiently pass through.

The top plate for cooker of the present invention is characterized by being formed of color crystallized glass having an Y value (brightness) of XYZ display system in C optical source of CIE of 2.5 to 15 at 3 mm thick.

### DESCRIPTION OF THE PREFERRED EMBODIMENTS

Since the top plate for cooker according to the present invention is formed of color crystallized glass having an Y value (brightness) of XYZ display system in C optical source of CIE of 2.5 to 15 at 3 mm thick, it is possible to shield the internal structure of the cooker such as heating device, wiring and the like, to allow the light from light-emitting elements of blue, green, yellow, red and the like colors to sufficiently pass through, and to implement at low cost. In other words, since the crystallized glass contains a coloring agent such as V₂O₅ or the like and hence colored, production at low cost is realized by dispensing with printing of an opaque coating material. Furthermore, since the Y value (brightness) is larger than 2.5, it allows the light from light-emitting elements of blue, green, yellow, red and the like colors to sufficiently pass through, while since the Y value is less than 15, the interior of the cooker cannot be seen through so that it is possible to shied the interior structure of the cooker such as heating device, wiring and the like. The Y value (brightness) is preferably in the range of 2.8 to 13, and more preferably in the range of 3.0 to 10.

In the top plate for cooker according to the present invention, the Y value (brightness) easily falls within the range of 2.5 to 15 when the color crystallized glass contains 0.01 to 0.5 mass% (% by mass) of V₂O₅. If the content of V₂O₅ is less than 0.01 mass%, the Y value (brightness) is liable to exceed 15, whereas if it is larger than 0.5 mass%, the Y value (brightness) is liable to fall below 2.5 and the color is liable to change by long-time use. The content of V₂O₅ is preferably in the range of 0.02 to 0.3 mass%.

Coloring of the crystallized glass by V₂O₅ is influenced by oxidation and reduction (redox) of the crystallizable glass, and the higher the degree of oxidation of the crystallizable glass the weaker the coloring degree. Degree of oxidation of the crystallizable glass can be represented by the indexes: ratio of Fe²⁺ (Fe²⁺/total Fe) or ratio of As³⁺ (As³⁺/total As). That is, when the ratio of Fe²⁺ or As³⁺ which is a reductant is low, it can be determined that the degree of oxidation of the glass is high.

To be more specific, when the top plate for cooker of the present invention is formed of color crystallized glass which is manufactured by heat-treating crystallizable glass having a ratio of Fe²⁺ of 75 mass% or less, Y value (brightness) of not less than 2.5 can easily be achieved. The ratio of Fe²⁺ (Fe²⁺/total Fe) is preferably in the range of 28 to 75%, and if the ratio of Fe²⁺ is less than 28%, the Y value is liable to exceed 15. More preferred range is from 35 to 70%.

On the other hand, when the top plate is formed of color crystallized glass manufactured by heat-treating crystallizable glass having a ratio of As³⁺ (As³⁺/total As) of 97 mass% or less, Y value (brightness) of not less than 2.5 can easily be achieved. The ratio of As³⁺ (As³⁺/total As) is preferably 95% or less, and more preferably in the range of 55 to 95%. If the ratio of As³⁺ is less than 55%, the Y value is liable to exceed 15. Particularly preferred range is from 65 to 95%.

As for the condition for heat treatment of the crystallizable glass, process temperature for nucleation (primary process temperature) is in the range of 600 to 800°C, process time for nucleation (primary process time) is in the range of 0.5 to 5 hours, process temperature for crystal growth (secondary process temperature) is in the range of 830 to 910°C, process time for crystal growth (secondary process time) is in the range of 0.1 to 3 hours, and the crystal growth process is preferably conducted in succession with the nucleation process.

As the method for controlling the ratio of Fe²⁺ (Fe²⁺/total Fe) to 75 mass% or less, or the ratio of As³⁺ (As³⁺/total As) to 97 mass% or less, for example, lowering of the melting temperature, addition of an oxidant such as nitrate or reduction in amount of the reductant can be exemplified.

As for the lowering of the melting temperature, for example, by lowering the melting temperature by 100°C at a melting temperature of 1600°C and a melting time of 20 hours, it is possible to decrease the ratio of Fe²⁺ and the ratio of As³⁺ by 30% and 25%, respectively.

As for the addition of an oxidant, for example, by increasing the adding ratio of the nitrate by 2%, it is possible to decrease the ratio of Fe²⁺ and the ratio of As³⁺ by 3% and 3%, respectively at a melting temperature of 1600°C and a melting time of 6 hours.

As for reduction in amount of the reductant, in the case where aluminum metal or carbon is added, for example, by reducing the amount of the aluminum metal or carbon by 0.5 mass% at a melting temperature of 1600°C and a melting time of 20 hours, it is possible to decrease the ratio of Fe²⁺ and the ratio of As³⁺ by 20% and 15%, respectively.

As described above, even for the same glass composition, by changing the melting temperature, use amounts of oxidant and reductant, it is possible to produce top plates made of crystallized glass having the same glass composition and different Y values. Accordingly, it becomes possible to provide a low-price top plate by successive production using a conventionally-used melting furnace because it is not necessary to change the glass composition.

Even in the case where the ratio of Fe²⁺ is higher than 75 mass% and the ratio of As³⁺ is higher than 97 mass%, it is possible to adjust the brightness to not less than 2.5 by reducing the amount of the coloring agent V₂O₅. In such a case, however, intended color tone cannot be often obtained because of strong coloring by impurities such as Fe, Cr and Ni that are likely to enter from materials or during process. Additionally, the above case is not desirable because there arises the problem that the color tone changes with change in amount of impurities.

Preferably, the top plate for cooker of the present invention is formed of color crystallized glass having average thermal expansion coefficient of -10 to +30 × 10⁻⁷/°C at 30 to 750°C. In such a configuration, high thermal shock resistance is achieved and breakage is not likely occur even when temperature distribution occurs in the face of the top plate during use. In particular, as the color crystallized glass, Li₂O-Al₂O₃-SiO₂-based color crystallized glass is preferred which precipitates 60 to 90 mass% of β-eucryptite solid solution as a main crystal and contains V₂O₅.

More specifically, the color crystallized glass preferably has the following composition (indicated by mass%): SiO₂ 55 to 75%, Al₂O₃ 14 to 28%, Li₂O 2.5 to 7%, MgO 0 to 4%, ZnO 0 to 5%, TiO₂ 0 to 6%, ZrO₂ 0 to 3%, V₂O₅ 0.01 to 0.5%, Na₂O 0 to 5%, K₂O 0 to 5%, Fe₂O₃ 0.001 to 0.3%, As₂O₃ 0.001 to 2.5%, CaO 0 to 5%, BaO 0 to 7% and PbO 0 to 3%, and precipitates β-quartz solid solution crystal.

Furthermore, the top plate for cooker of the present invention preferably has a thickness of 2.5 to 6 mm. If the thickness is less than 2.5 mm, the mechanical strength is poor and break is likely to occur during cooking. If the thickness is larger than 6 mm, not only the material cost rises, but also uniform crystallization is difficult to achieve, so that it becomes necessary to elongate the time of heat treatment or use a crystallization furnace with high soaking property so as to realize uniform crystallization, and hence the cost inclines to rise. This also poses a problem that mechanical processing accuracy is difficult to be obtained.

Next, the top plate for cooker of the present invention will be described in detail on the basis of

### Examples.

Table 1 shows Examples 1 to 5 of the present invention, and Table 2 shows Examples 6 to 8 and Comparative example.

**Table 1**

| | | | Ex.1 | Ex.2 | Ex.3 | Ex.4 | Ex.5 |
|---|---|---|---|---|---|---|---|
| SiO₂ | | | 68 | 67 | 65.7 | 65 | 64.7 |
| Al₂O₃ | | | 20 | 20 | 19.8 | 22 | 21.8 |
| Li₂O | | | 4 | 4 | 4 | 4 | 4 |
| MgO | | | 1 | 1 | 1 | 0.5 | 0.5 |
| ZnO | | | 0.5 | 0.5 | 0.5 | 1.5 | 1.5 |
| CaO | | | - | - | - | - | - |
| TiO₂ | | | 4.5 | 2.0 | 2.5 | 1.5 | 2.0 |
| ZrO₂ | | | - | 1.5 | 1.5 | 1.5 | 1.5 |
| P₂O₅ | | | - | - | 1.5 | - | - |
| Na₂O | | | 0.5 | 0.5 | 0.5 | 1.0 | 1.0 |
| K₂O | | | 0.5 | 0.5 | 0.5 | - | - |
| BaO | | | - | 2 | 1.5 | 1.5 | 2.0 |
| As₂O₃ | | | 1.0 | 0.5 | 0.5 | - | - |
| Sb₂O₃ | | | - | - | 0.5 | 1.5 | 1.0 |
| SnO₂ | | | - | 0.5 | - | - | - |
| V₂O₅ | | | 0.08 | 0.07 | 0.10 | 0.25 | 0.03 |
| Fe₂O₃ | | | 0.02 | 0.02 | 0.02 | 0.02 | 0.1 |
| MnO | | | - | - | - | - | 0.1 |
| NiO | | | - | - | - | - | 0.2 |
| CoO | | | - | - | - | - | 0.05 |
| Cr₂O₃ | | | - | - | - | - | - |
| Melting Temperature | | | 1620 | 1580 | 1620 | 1600 | 1620 |
| Use of Nitrate | | | ○ | ○ | ○ | ○ | ○ |
| Fe²⁺/Total Fe of Crystallizable Glass (mass%) | | | 55 | 35 | 55 | 40 | 55 |
| As³⁺/Total As of Crystallizable Glass (mass%) | | | 80 | 65 | 85 | - | - |
| Crystallization Process | Nucleation | | 750°C- 3hr | 750°C- 3hr | 750°C- 3hr | 750°C- 3hr | 750°C- 3hr |
| | Crystal Growth | | 870°C- 1hr | 870°C- 1hr | 870°C- 1hr | 870°C- 1hr | 870°C- 1hr |
| Brightness(Y Value,3mmt) | | | 3.0 | 12.1 | 4.0 | 3.5 | 3.0 |
| Thermal Expansion Coefficient (×10⁻⁷/°C, 30∼750°C) | | | 0 | 3 | -3 | 1 | 1 |
| Evaluation of Transparency | | | ○ | ○ | ○ | ○ | ○ |
| Evaluation of Light from Light-Emitting Element | | Red | ○ | ○ | ○ | ○ | ○ |
| | | Blue | ○ | ○ | ○ | ○ | ○ |
| | | Green | ○ | ○ | ○ | ○ | ○ |

**Table 2**

| | | | Ex.6 | Ex.7 | Ex.8 | Comp.Ex. |
|---|---|---|---|---|---|---|
| SiO₂ | | | 63.1 | 63.3 | 66.6 | 68 |
| Al₂O₃ | | | 22 | 22 | 20 | 20 |
| Li₂O | | | 4 | 4 | 4.1 | 4 |
| MgO | | | 0.6 | 0.6 | 0.8 | 1 |
| ZnO | | | 0.7 | 0.7 | 0.4 | 0.5 |
| CaO | | | 0.1 | - | - | - |
| TiO₂ | | | 3.1 | 3.1 | 2.2 | 4.5 |
| ZrO₂ | | | 1.2 | 1.2 | 1.5 | - |
| P₂O₅ | | | 1.9 | 1.9 | - | - |
| Na₂O | | | 0.3 | 0.3 | 0.4 | 0.5 |
| K₂O | | | 0.8 | 0.7 | 0.3 | 0.5 |
| BaO | | | 0.1 | 0.3 | 2 | - |
| As₂O₃ | | | 1.1 | 1 | 1 | 1.0 |
| Sb₂O₃ | | | 1 | 0.9 | - | - |
| SnO₂ | | | - | - | 0.7 | - |
| V₂O₅ | | | 0.06 | 0.04 | 0.12 | 0.12 |
| Fe₂O₃ | | | 0.1 | 0.1 | 0.02 | 0.02 |
| MnO | | | - | 0.3 | - | - |
| NiO | | | 0.1 | 0.3 | - | - |
| CoO | | | 0.3 | 0.2 | - | - |
| Cr₂O₃ | | | 0.5 | - | - | - |
| Melting Temperature | | | 1600 | 1645 | 1600 | 1650 |
| Use of Nitrate | | | ○ | ○ | ○ | × |
| Fe²⁺/Total Fe of Crystallizable Glass (mass%) | | | 45 | 70 | 30 | 80 |
| As³⁺/Total As of Crystallizable Glass (mass%) | | | 75 | 95 | 60 | 99 |
| Crystallization Process | Nucleation | | 750°C- 3hr | 750°C- 3hr | 720°C- 3hr | 780°C-3hr |
| | Crystal Growth | | 870°C- 1hr | 870°C- 1hr | 870°C- 1hr | 870°C-1hr |
| Brightness(Y Value,3mmt) | | | 4.5 | 4.5 | 2.7 | 1.9 |
| Thermal Expansion Coefficient (×10⁻⁷/°C, 30∼750°C) | | | 5 | 5 | 3 | 0 |
| Evaluation of Transparency | | | ○ | ○ | ○ | ○ |
| Evaluation of Light from Light-Emitting Element | | Red | ○ | ○ | ○ | Δ |
| | | Blue | ○ | ○ | ○ | × |
| | | Green | ○ | ○ | ○ | × |

After mixing the raw materials in the compositions as shown in Tables 1 and 2 and melting them for 20 hours at the melting temperatures shown in Tables, the melts were formed into plate and manufactured crystallizable glass. In Example 1, sodium nitrate and potassium nitrate were respectively used as raw materials for Na₂O and K₂O, and in Examples 2 to 8, barium nitrate was used as a raw material for BaO. In Comparative example, sodium carbonate and potassium carbonate were respectively used as raw materials for Na₂O and K₂O.

Then these crystallizable glass was crystallized under the baking condition as shown in Tables, to produce color low-expansion crystallized glass of Examples 1 to 8 and Comparative example.

As is apparent from Tables, in Examples 1 to 8, the Y value (brightness) falls within the range of 2.5 to 15, so that the internal structure of the cooker such as heating device and wiring can be shielded, and the light from blue, green and red light-emitting diodes sufficiently passed therethrough.

To the contrary, in Comparative example, since the Y value (brightness) is as low as 1.9, the light from the blue and green light-emitting diodes completely failed to pass through the plate but the light from the red light-emitting diode could be barely observed.

The total amount of Fe of crystallizable glass was determined by ICP emission spectrometry and the amount of Fe²⁺ was determined by O-phenanthroline absorption spectrometry. The total amount of As of crystallizable glass was determined by ICP emission spectrometry and the amount of As³⁺ was determined by removing As³⁺ by volatilization with sulfuric acid and hydrofluoric acid, and calculating the difference between the amount of As⁵⁺ determined by ICP emission spectrometry and the total amount of As.

Furthermore, as for the crystallized glass, the valenecy in the state of crystallizable glass can be determined by chemically dissolving and analyzing the whole quantity as described above.

Y value (brightness) was determined for a 3 mm-thick plate formed of crystallized glass which is optically polished on both surfaces, by converting transmittance at a wavelength between 380 to 780 nm measured by using a spectrophotometer to XYZ display system in C optical source of CIE (International Commission on Illumination).

Thermal expansion coefficient was determined by using a dilatometer (manufactured by Mac Science).

Transmittancy was evaluated in the following manner: mounting a manufactured top plate formed of crystallized glass (4 mm thick) on an electromagnetic heating cooker, placing 36W fluorescent bulb at 1 m directly above the top plate, determining by visual check whether the interior of the cooker is seen through, and evaluating in such the following manner: when the interior of the cooker cannot be seen through at all, the denotation is "○" and when the interior of the cooker can be seen through, the denotation is "×".

Transmittancy of light-emitting element was evaluated in the following manner: placing a red light-emitting diode, green light-emitting diode and blue light-emitting diode at 1 cm from the back surface of the top plate (4 mm thick), determining by visual check whether the light from these light-emitting diodes can be seen from the top surface side of the top plate, and evaluating in the following manner: when the light from light-emitting diode is sufficiently passed and can been seen the denotation is "○", when the light from light-emitting diode can be slightly seen, the denotation is "Δ" and when the light from light-emitting diode cannot be seen at all, the denotation is "×".

As described above, since the top plate for cooker of the present invention can shield the interior structure of the cooker such as heating device and wiring, allow the light from light-emitting elements of blue, green, yellow, red and the like color to pass through, and can be manufactured at low cost, it is desirably used as a top plate for cooker such as electromagnetic heating (IH) cooker or gas cooker.

## Claims

1. A top plate for cooker formed of color crystallized glass having an Y value (brightness) in XYZ display system in C optical source of CIE of 2.5 to 15 at a thickness of 3 mm.

2. The top plate for cooker according to claim 1, formed of color crystallized glass containing 0.01 to 0.5 mass% of V₂O₅.

3. The top plate for cooker according to claim 1 or 2 formed of color crystallized glass which is manufactured by heat-treating crystallizable glass having a ratio of Fe²⁺ (Fe²⁺/total Fe) of not more than 75 mass%.

4. The top plate for cooker according to any one of claims 1 to 3 formed of color crystallized glass which is manufactured by heat-treating crystallizable glass having a ratio of As³⁺ (As³⁺/total As) of not more than 97 mass%.

5. The top plate for cooker according to claim 4, wherein the ratio of As³⁺ (As³⁺/total As) is not more than 95 mass%.

## Patentansprüche

1. Oberplatte für Kocher, gebildet aus Farbkristallglas mit einem Y-Wert (Helligkeit) im XYZ-Anzeigesystem in C optische Quelle von CIE von 2,5 bis 15 bei einer Dicke von 3 mm.

2. Oberplatte für Kocher nach Anspruch 1, gebildet aus Farbkristallglas, enthaltend 0,01 bis 0,5 Masse% an V₂O₅.

3. Oberplatte für Kocher nach Anspruch 1 oder 2, gebildet aus Farbkristallglas, das hergestellt ist durch Wärmebehandeln von kristallisierbarem Glas mit einem Anteil von Fe²⁺ (Fe²⁺/Gesamt-Fe) von nicht mehr als 75 Masse%.

4. Oberplatte für Kocher nach mindestens einem der Ansprüche 1 bis 3, gebildet aus Farbkristallglas, das hergestellt ist durch Wärmebehandeln von kristallisierbarem Glas mit einem Anteil von As³⁺ (As³⁺/Gesamt-As) von nicht mehr als 97 Masse%.

5. Oberplatte für Kocher nach Anspruch 4, wobei der Anteil an As³⁺ (As³⁺/Gesamt-As) nicht mehr als 95 Masse% beträgt.

## Revendications

1. Plaque supérieure pour appareil de cuisson formée d'un verre cristallisé de couleur ayant une valeur Y (luminosité) dans un système d'affichage XYZ d'une source optique C de CIE de 2,5 à 15 à une épaisseur de 3 mm.

2. Plaque supérieure pour appareil de cuisson selon la revendication 1, formée d'un verre cristallisé de couleur contenant de 0,01 à 0,5 % en masse de V₂O₅.

3. Plaque supérieure pour appareil de cuisson selon la revendication 1 ou 2 formé d'un verre cristallisé de couleur qui est fabriqué par traitement thermique d'un un verre cristallisable ayant un ratio de Fe²⁺ (Fe²⁺/total Fe) non supérieur à 75 % en masse.

4. Plaque supérieure pour appareil de cuisson selon l'une quelconque des revendications 1 à 3 formée d'un verre cristallisé de couleur qui est fabriqué par traitement thermique d'un verre cristallisable ayant un ratio de As³⁺ (As³⁺/total As) non supérieur à 97% en masse.

5. Plaque supérieure pour appareil de cuisson selon la revendication 4, dans laquelle le ratio de As³⁺ (As³⁺/total As) n'est pas supérieur à 95% en masse.
